(19) 

Europäisches Patentamt

European Patent Office

Office européen des brevets

(11) **EP 4 529 068 A1**

(12) **EUROPEAN PATENT APPLICATION**
published in accordance with Art. 153(4) EPC

(43) Date of publication:
26.03.2025 Bulletin 2025/13

(21) Application number: 23826228.1

(22) Date of filing: 14.06.2023

(51) International Patent Classification (IPC):
*H04L 5/00* (2006.01) *H04B 1/69* (2011.01)

(52) Cooperative Patent Classification (CPC):
H04B 1/69; H04L 5/00; H04L 27/26

(86) International application number:
PCT/CN2023/100151

(87) International publication number:
WO 2023/246579 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.06.2022 CN 202210703945

(71) Applicant: Huawei Technologies Co., Ltd.
Shenzhen, Guangdong 518129 (CN)

(72) Inventors:
• QIAN, Bin
Shenzhen, Guangdong 518129 (CN)
• LIU, Chenchen
Shenzhen, Guangdong 518129 (CN)
• YANG, Xun
Shenzhen, Guangdong 518129 (CN)

(74) Representative: Pfenning, Meinig & Partner mbB
Patent- und Rechtsanwälte
Theresienhöhe 11a
80339 München (DE)

(54) **SIGNAL SYNCHRONIZATION METHOD APPLIED TO ULTRA WIDEBAND SYSTEM, AND COMMUNICATION APPARATUS**

(57) This application is applied to an ultra-wideband-based wireless personal local area network system, including 802.15 series protocols, such as the 802.15.4a protocol, the 802.15.4z protocol, or the 802.15.4ab protocol, and may further support an IEEE 802.11 ax next-generation Wi-Fi protocol like 802.11be, Wi-Fi 7, or an extremely high throughput, and 802.11bn. This application provides a signal synchronization method applied to an ultra-wideband system, and a communication apparatus. The method includes: sending a narrowband signal, where a PPDU of the narrowband signal includes at least one pilot symbol, and the pilot symbol and the PPDU are used by a receiving device to obtain time-frequency synchronization information of an ultra-wideband signal; and sending the ultra-wideband signal. A carrier frequency offset is estimated based on these inserted pilot symbols and a preamble in the PPDU. This can implement high-precision time-frequency synchronization of the ultra-wideband signal between a sending device and the receiving device.

FIG. 3

**Description**

This application claims priority to Chinese Patent Application No. 202210703945.4, filed with the China National Intellectual Property Administration on June 21, 2022 and entitled "SIGNAL SYNCHRONIZATION METHOD APPLIED TO ULTRA-WIDEBAND SYSTEM, AND COMMUNICATION APPARATUS", which is incorporated herein by reference in its entirety.

**TECHNICAL FIELD**

This application relates to the field of ultra-wideband technologies, and more specifically, to a signal synchronization method applied to an ultra-wideband system, and a communication apparatus.

**BACKGROUND**

An ultra-wideband (ultra-wideband, UWB) technology is a wireless carrier communication technology, and implements data transmission by sending and receiving an extremely narrow pulse at a level of a nanosecond or less than microsecond. For its widely occupied spectrum range and very low radiation spectrum density, the UWB technology has advantages of a high multi-path resolution capacity, low power consumption, high confidentiality, and the like.

Because data transmission is implemented through the extremely narrow pulse, the UWB technology has a very high requirement on time-frequency synchronization between a sending device and a receiving device. Although time-frequency synchronization of a UWB signal may be assisted based on initial time-frequency synchronization information provided by a narrowband (narrowband, NB) signal, a large error exists in the initial time-frequency synchronization information provided by the existing NB signal. This reduces time-frequency synchronization precision of the UWB signal.

**SUMMARY**

This application provides a signal synchronization method applied to an ultra-wideband system, and a communication apparatus, to insert at least one pilot symbol into a PPDU of an NB signal, and estimate a carrier frequency offset based on the inserted pilot symbol and an original preamble in the PPDU. This can support estimation and compensation of the carrier frequency offset in a data receiving process, and has higher carrier frequency offset estimation precision, to implement high-precision time-frequency synchronization of a UWB signal between a sending device and a receiving device.

According to a first aspect, a signal synchronization method applied to an ultra-wideband system is provided, including: sending a narrowband signal, where a physical layer protocol data unit (physical layer protocol data unit, PPDU) of the narrowband signal includes at least one pilot symbol, the at least one pilot symbol is used by a receiving device to obtain time-frequency synchronization information of the narrowband signal, and the at least one pilot symbol is a symbol agreed on by a sending device and the receiving device; and sending an ultra-wideband signal, where the time-frequency synchronization information of the narrowband signal is used by the receiving device to obtain time-frequency synchronization information of the ultra-wideband signal.

It should be understood that the narrowband signal may be understood as a signal whose bandwidth is less than or equal to a first threshold, and the ultra-wideband signal may be understood as a signal whose bandwidth is greater than or equal to a second threshold, where the second threshold is greater than the first threshold.

The at least one pilot symbol is inserted into the PPDU of the narrowband signal, and a carrier frequency offset is estimated based on the inserted pilot symbol and an original preamble in the PPDU. This can support estimation and compensation of the carrier frequency offset in a data receiving process, and has higher carrier frequency offset estimation precision, to implement high-precision time-frequency synchronization of a UWB signal between the sending device and the receiving device.

With reference to the first aspect, in some implementations of the first aspect, a physical layer service data unit (physical layer protocol service data unit, PSDU) in the physical layer protocol data unit PPDU includes the at least one pilot symbol.

Specifically, a quantity of bytes of the PSDU in the PPDU of the narrowband signal is variable. The at least one pilot symbol used by the receiving device to obtain the time-frequency synchronization information of the narrowband signal is embedded in the PSDU in the PPDU of the narrowband signal. This can implement estimation and compensation of a carrier frequency offset in a data receiving process without significantly changing a frame structure of the PPDU, and has higher carrier frequency offset estimation precision, to implement high-precision time-frequency synchronization of the UWB signal between the sending device and the receiving device.

With reference to the first aspect, in some implementations of the first aspect, each pilot symbol includes M bits of 0, and M is an integer multiple of 4.

With reference to the first aspect, in some implementations of the first aspect, the narrowband signal and the ultra-wideband signal have a common local clock.

Specifically, the narrowband signal and the ultra-wideband signal have the common local clock. In this way, the receiving device may obtain the time-frequency synchronization information of the ultra-wideband signal based on the time-frequency synchronization information of the narrowband signal received by the receiving device, to implement time-frequency synchronization of the ultra-wideband signal between the receiving device and the sending device.

According to a second aspect, a signal synchronization method applied to an ultra-wideband system is provided, including: receiving a narrowband signal, where a physical layer protocol data unit of the narrowband signal includes at least one pilot symbol, the pilot symbol is used by a receiving device to obtain time-frequency synchronization information of the narrowband signal, and the pilot symbol is a symbol agreed on by a sending device and the receiving device; receiving an ultra-wideband signal; and obtaining time-frequency synchronization information of the ultra-wideband signal based on the time-frequency synchronization information of the narrowband signal.

With reference to the second aspect, in some implementations of the second aspect, a physical layer service data unit in the physical layer protocol data unit includes the at least one pilot symbol.

With reference to the second aspect, in some implementations of the second aspect, each pilot symbol includes M bits of 0, and M is an integer multiple of 4.

With reference to the second aspect, in some implementations of the second aspect, the narrowband signal and the ultra-wideband signal have a common local clock.

According to a third aspect, a communication apparatus is provided, including: a sending unit, configured to send a narrowband signal, where a physical layer protocol data unit of the narrowband signal includes at least one pilot symbol, the at least one pilot symbol is used by a receiving device to obtain time-frequency synchronization information of the narrowband signal, and the at least one pilot symbol is a symbol agreed on by the communication apparatus and the receiving device; and the sending unit is further configured to send an ultra-wideband signal, where the time-frequency synchronization information of the narrowband signal is used by the receiving device to obtain time-frequency synchronization information of the ultra-wideband signal.

With reference to the third aspect, in some implementations of the third aspect, a physical layer service data unit in the physical layer protocol data unit includes the at least one pilot symbol.

With reference to the third aspect, in some implementations of the third aspect, a quantity of pilot symbols is associated with a quantity of bytes of the physical layer service data unit.

With reference to the third aspect, in some implementations of the third aspect, each pilot symbol includes M bits of 0, and M is an integer multiple of 4.

With reference to the third aspect, in some implementations of the third aspect, the narrowband signal and the ultra-wideband signal have a common local clock.

According to a fourth aspect, a communication apparatus is provided, including: a receiving unit, configured to receive a narrowband signal, where a physical layer protocol data unit of the narrowband signal includes at least one pilot symbol, the pilot symbol is used by the communication apparatus to obtain time-frequency synchronization information of the narrowband signal, and the pilot symbol is a symbol agreed on by a sending device and the communication apparatus, where the receiving unit is further configured to receive an ultra-wideband signal; and a processing unit, configured to obtain time-frequency synchronization information of the ultra-wideband signal based on the time-frequency synchronization information of the narrowband signal.

With reference to the fourth aspect, in some implementations of the fourth aspect, a physical layer service data unit in the physical layer protocol data unit includes the at least one pilot symbol.

With reference to the fourth aspect, in some implementations of the fourth aspect, each pilot symbol includes M bits of 0, and M is an integer multiple of 4.

With reference to the fourth aspect, in some implementations of the fourth aspect, the narrowband signal and the ultra-wideband signal have a common local clock.

According to a fifth aspect, a communication apparatus is provided, and includes a processor and a memory. Optionally, the apparatus may further include a transceiver. The memory is configured to store a computer program. The processor is configured to: invoke and run the computer program stored in the memory, and control the transceiver to receive and send a signal, to enable the communication apparatus to perform the method according to the first aspect or any one of the possible implementations of the first aspect.

According to a sixth aspect, a communication apparatus is provided, and includes a processor and a memory. Optionally, the apparatus may further include a transceiver. The memory is configured to store a computer program. The processor is configured to invoke and run the computer program stored in the memory, and control the transceiver to receive and send a signal, to enable the communication apparatus to perform the method according to the second aspect or any one of the possible implementations of the second aspect.

According to a seventh aspect, a communication apparatus is provided, and includes a processor and a communication interface. The communication interface is configured to receive data and/or information, and transmit the received data and/or information to the processor, the processor processes the data and/or the information, and the communication interface is further configured to output data and/or information obtained through processing by the processor, so that the method according to the first aspect or any one of the possible implementations of the first aspect is performed.

According to an eighth aspect, a communication apparatus is provided, and includes a processor and a communication interface. The communication interface is configured to receive (or referred to as input) data and/or information, and transmit the received data and/or information to the processor, the processor processes the data and/or the information, and the communication interface is further configured to output data and/or information obtained through processing by the processor, so that the method according to the second aspect or any one of the possible implementations of the second aspect is performed.

According to a ninth aspect, a communication apparatus is provided, and includes at least one processor. The at least one processor is coupled to at least one memory. The at least one processor is configured to execute a computer program or instructions stored in the at least one memory, so that the communication apparatus performs the method according to the first aspect or any one of the possible implementations of the first aspect.

According to a tenth aspect, a communication apparatus is provided, and includes at least one processor. The at least one processor is coupled to at least one memory. The at least one processor is configured to execute a computer program or instructions stored in the at least one memory, so that the communication apparatus performs the method according to the second aspect or any one of the possible implementations of the second aspect.

According to an eleventh aspect, a computer-readable storage medium is provided. The computer-readable storage medium stores computer instructions, and when the computer instructions are run on a computer, the method according to the first aspect or any one of the possible implementations of the first aspect is performed.

According to a twelfth aspect, a computer-readable storage medium is provided. The computer-readable storage medium stores computer instructions, and when the computer instructions are run on a computer, the method according to the second aspect or any one of the possible implementations of the second aspect is performed.

According to a thirteenth aspect, a computer program product is provided. The computer program product includes computer program code, and when the computer program code is run on a computer, the method according to the first aspect or any one of the possible implementations of the first aspect is performed.

According to a fourteenth aspect, a computer program product is provided. The computer program product includes computer program code, and when the computer program code is run on a computer, the method according to the second aspect or any one of the possible implementations of the second aspect is performed.

According to a fifteenth aspect, a wireless communication system is provided, and includes the communication apparatus according to the third aspect and the communication apparatus according to the fourth aspect.

## BRIEF DESCRIPTION OF DRAWINGS

FIG. 1 is a diagram of a structure of a PPDU 100 in a narrowband system;
FIG. 2 is a diagram of an architecture of a communication system 200 to which an embodiment of this application is applicable;
FIG. 3 is an interaction flowchart of a signal synchronization method 300 applied to an ultra-wideband system according to an embodiment of this application;
FIG. 4 is a diagram of a structure of a PPDU 400 of a narrowband signal according to an embodiment of this application;
FIG. 5 is a diagram of a simulation result of a CFO based on a PPDU 400;
FIG. 6 is a diagram of an internal structure of a sending device/receiving device;
FIG. 7 is a block diagram of a communication apparatus 700 according to an embodiment of this application; and
FIG. 8 is a diagram of a structure of a communication apparatus 800 according to an embodiment of this application.

## DESCRIPTION OF EMBODIMENTS

The following describes technical solutions of this application with reference to accompanying drawings.

The technical solutions of this application may be applied to a wireless personal area network (wireless personal area network, WPAN). Currently, a standard used for the WPAN is the institute of electrical and electronics engineers (institute of electrical and electronics engineers, IEEE) 802.15 series. The WPAN may be used for communication between digital auxiliary devices in a small range, such as a telephone, a computer, and an auxiliary device. Technologies that support the wireless personal area network include Bluetooth (Bluetooth), Zigbee (Zigbee), ultra-wideband (ultra-wideband, UWB), an infrared data association (infrared data association, IrDA) connection technology, home radio frequency (home radio frequency, HomeRF), and the like. From a perspective of network composition, the WPAN is located at a bottom layer of an entire network architecture and is used for a wireless connection between devices in a small range, that is, a point-to-point short-distance connection. The WPAN may be considered as a short-distance wireless communication network. Based on different application scenarios, WPANs are further classified into a high rate (high rate, HR)-WPAN and a low rate (low rate, LR)-WPAN. The HR-WPAN may be used to support various high-rate multimedia applications, including high-quality sound image delivery, multi-megabyte music and image document transmission, and the like. The LR-WPAN may be for common services in daily life.

In the WPAN, devices may be classified into a full-function device (full-function device, FFD) and a reduced-function device (reduced-function device, RFD) based on communication capabilities of the devices. FFDs can communicate with each other and an FFD can communicate with an RFD. RFDs cannot directly communicate with each other. An RFD can communicate only with an FFD or forward data through one FFD. The FFD associated with the RFD is referred to as a coordinator (coordinator) of the RFD. The RFD is mainly used for simple control application, for example, a light switch and a passive infrared sensor. A small amount of data is transmitted, and small quantities of transmission resources and communication resources are occupied. Therefore, costs of the RFD are low. The coordinator may also be referred to as a personal area network (personal area network, PAN) coordinator, a central control node, or the like. The PAN coordinator is a main control node of an entire network, and each ad hoc network can have only one PAN coordinator that has functions of member identity management, link information management, and packet forwarding.

Optionally, a device (for example, a sending device or a receiving device) in embodiments of this application may be a device supporting the 802.15 series, for example, a device supporting a plurality of WPAN standards such as 802.15.4a, 802.15.4z, a WPAN standard under discussion, or a WPAN standard in a subsequent version.

Optionally, this application may be applied to a UWB-based wireless personal area network system, including 802.15 series protocols such as the 802.15.4a protocol, the 802.15.4z protocol, or the 802.15.4ab protocol. A next-generation Wi-Fi protocol of IEEE 802.11ax like 802.11be, Wi-Fi 7, or an EHT, and 802.11bn may also be supported.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, contacts, word processing software, and instant messaging software. In addition, a specific structure of an execution body of a method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that is in the FFD or the RFD and that can invoke and execute a program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to a magnetic storage component (for example, a hard disk, a floppy disk or a magnetic tape), an optical disc (for example, a compact disc (compact disc, CD), a digital versatile disc (digital versatile disc, DVD)), a smart card and a flash storage component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include and/or carry instructions and/or data.

The technical solutions of this application are further applicable to a wireless local area network system, for example, an internet of things (internet of things, IoT) network or a vehicle-to-everything (vehicle to x, V2X) network. It is clear that embodiments of this application are further applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems to which this application is applicable are only examples for descriptions, and the communication systems to which this application is applicable are not limited thereto. This is uniformly described herein, and details are not described below again.

In the WPAN, a UWB technology performs data transmission through nanosecond-level non-sine wave narrow pulses and therefore occupies a wide frequency spectrum range. For its narrow pulse and extremely low radiation spectrum density, the UWB technology has advantages of a high multi-path resolution capacity, low power consumption, high confidentiality, and the like.

Currently, the UWB technology has been written into IEEE 802 series wireless standards, and the WPAN standard IEEE 802.15.4a based on the UWB technology and the evolution version IEEE 802.15.4z of the WPAN standard have been released. Currently, formulation of the next-generation WPAN standard 802.15.4ab of the UWB technology has been put on the agenda.

The UWB technology performs data transmission by sending and receiving an extremely narrow pulse at a level of a nanosecond or less than a microsecond. Therefore, synchronization of a UWB signal between a sending device and a receiving device is significant. Synchronization of the UWB signal between the sending device and the receiving device may be understood as follows: A physical layer protocol data unit (physical layer protocol data unit, PPDU) of the sending device is sent in a form of a pulse signal, and the receiving device determines a pulse signal from which a plurality of received pulse signals start to be a PPDU to be received by the receiving device. Alternatively, it may be understood as follows: The receiving device compensates for a deviation of carrier frequencies between the receiving device and the sending device.

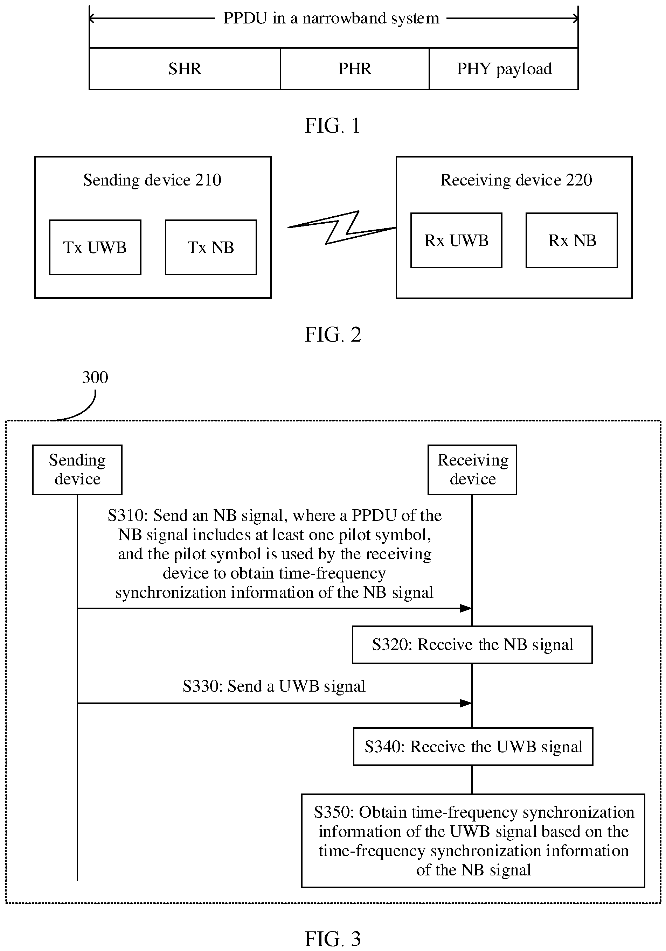

Currently, time-frequency synchronization performed by the receiving device on a UWB signal is mainly implemented by detecting a synchronization header (synchronization header, SHR) in a PPDU of a narrowband (narrowband, NB) signal sent by the sending device to the receiving device. Specifically, the NB signal first sent by the sending device to the receiving device is used to provide initial time-frequency synchronization information for a UWB signal subsequently sent by the sending device to the receiving device. The receiving device may perform correlation detection on the SHR of the PPDU of the NB signal, to determine a start position of the PPDU of the UWB signal to be received and the deviation of the carrier frequencies between sending device and the receiving device, and perform carrier frequency offset compensation on the deviation. For a PPDU structure of the NB signal, refer to FIG. 1.

FIG. 1 is a diagram of a structure of a PPDU 100 in a narrowband system. As shown in FIG. 1, the PPDU 100 includes an SHR, a physical header (physical header, PHR), and a physical layer (physical layer, PHY) payload field (payload field). The PHY payload field may also be understood as a physical layer service data unit (physical layer service data unit, PSDU). In addition, the SHR includes a preamble (preamble) and a start-of-frame delimiter (start-of-frame delimiter, SFD).

Specifically, the preamble includes 32 bits of 0 and is for synchronization of a symbol and a chip (chip). The SFD is fixed 10100111, and is used to determine the end of the preamble and the start of a data frame. The PHR indicates a length of the PSDU, and a value of the PHR may range from 1 to 127, and a quantity of bytes indicating the PSDU ranges from 1 to 127.

Specifically, the NB signal used to assist time-frequency synchronization of the UWB signal may be sent in an offset-quadrature phase shift keying (offset-quadrature phase shift keying, O-QPSK) modulation scheme. To enhance system robustness (robustness), before O-QPSK modulation, 4-bit encoded (or uncoded) bit information may be mapped to a chip sequence with a length of 8 or 32 bits, and time-frequency synchronization information of the sent information bits is determined by receiving and using a chip sequence. The following is an example:

data bits (data bits) in the PPDU → a data symbol → a chip → O-QPSK modulation → modulated data

Specifically, every four data bits in the PPDU 100 are mapped to a data symbol (data symbol), and each data symbol is mapped to a chip sequence including 32 chip (chip) values. A mapping relationship between a data symbol and a chip sequence is shown in Table 1.

**Table 1**

| Data symbol (data symbol) | 32 chip values (chip values) in the chip sequence |
|---|---|
| 0 | 11011001110000110101001000101110 |
| 1 | 11101101100111000011010100100010 |
| 2 | 00101110110110011100001101010010 |
| 3 | 00100010111011011001110000110101 |
| 4 | 01010010001011101101100111000011 |
| 5 | 00110101001000101110110110011100 |
| 6 | 11000011010100100010111011011001 |
| 7 | 10011100001101010010001011101101 |

(continued)

| Data symbol (data symbol) | 32 chip values (chip values) in the chip sequence |
|---|---|
| 8 | 10001100100101100000011101111011 |
| 9 | 10111000110010010110000001110111 |
| 10 | 01111011100011001001011000000111 |
| 11 | 01110111101110001100100101100000 |
| 12 | 00000111011110111000110010010110 |
| 13 | 01100000011101111011100011001001 |
| 14 | 10010110000001110111101110001100 |
| 15 | 11001001011000000111011110111000 |

As described above, the preamble in the PPDU 100 of the NB signal includes 32 bits of 0, and may be mapped to eight data symbols, and specifically corresponds to the data symbol 0 in Table 1. In other words, the preamble in the PPDU 100 may be mapped to eight same chip sequences corresponding to the data symbol 0. Further, a carrier frequency offset (carrier frequency offset, CFO) of the receiving device based on the preamble in the PPDU 100 of the NB signal of the sending device may be expressed as:

$$-\frac{1}{2T} \leq \Delta\mathrm{f} \leq \frac{1}{2T} \ (1)$$

$\Delta$f indicates a CFO, T indicates interval time between two chips having same values, and the foregoing two chips are located at same positions that are in two chip sequences corresponding to a periodic data symbol. It can be learned from the foregoing that the preamble may be mapped to eight same chip sequences. Therefore, a maximum value of T is $T_{max} = (32/2) * 7 * T_c$, and a minimum value of T is $T_{min} = (32/2) * 1 * T_c$. $T_c$ indicates duration of a chip. In addition, the foregoing "7" indicates a quantity of chip sequences that are between a first chip sequence and an eighth chip sequence and that correspond to the data symbol 0. The foregoing "1" indicates a quantity of chip sequences that are between a first chip sequence and a second chip sequence and that correspond to the data symbol 0.

It can be learned from the foregoing formula that an absolute value of $\Delta$f estimated by the receiving device by using the preamble of the PPDU 100 of the NB signal meets the following condition:

$$|\Delta\mathrm{f}| \in \left[\frac{1}{2T_{max}}, \ \frac{1}{2T_{min}}\right] \ (2)$$

It may be understood that the NB signal and the UWB signal of the sending device or the receiving device have a same local clock. In other words, the NB signal and the UWB signal that are sent by the sending device or received by the receiving device have a same local clock, that is, for the sending device, the NB signal and the UWB signal that are sent by the sending device have the same local clock; and for a receiving device, the NB signal and the UWB signal that are received by the receiving device have the same local clock, but a frequency deviation exists between the sending device and the receiving device. For example, a frequency of the NB signal sent by the sending device is F1, a frequency of the NB signal received by the receiving device is F2, and |F2-F1|=$\Delta$f, and a frequency of the UWB signal sent by the sending device is F3, a frequency of the UWB signal received by the receiving device is F4, and |F4-F3|=A*$\Delta$f, where A is a fixed parameter. Therefore, the receiving device may obtain time-frequency synchronization information of the received UWB signal based on time-frequency synchronization information of the received NB signal of the sending device.

It can be learned from the formula (2) that a result obtained by the receiving device by performing CFO estimation based on the preamble in the PPDU 100 of the NB signal of the sending device is affected by $T_{max}$. If $T_{max}$ is small, a large residual deviation is caused, and consequently, time-frequency synchronization of the NB-signal-assisted UWB signal between the sending device and the receiving device is inaccurate.

In view of the foregoing technical problem, this application provides a signal synchronization method applied to an ultra-wideband system, and a communication apparatus, to insert at least one pilot symbol into the PPDU of the NB signal, and estimate a carrier frequency offset based on the inserted pilot symbol and an original preamble in the PPDU. This can support estimation and compensation of the carrier frequency offset in a data receiving process, and has higher CFO estimation precision, to implement high-precision time-frequency synchronization of the UWB signal between the sending device and the receiving device.

The following describes a UWB signal synchronization method and an application scenario of the UWB signal synchronization method in embodiments of this application with reference to the accompanying drawings.

FIG. 2 is a diagram of an architecture of a communication system 200 to which an embodiment of this application is applicable. As shown in FIG. 2, the communication system 200 includes at least one sending device 210 and one receiving device 220. The sending device 210 and the receiving device 220 may communicate with each other by using a UWB technology, or may communicate with each other by using an NB technology. The sending device 210 and the receiving device 220 may each include a UWB signal processing module and an NB signal processing module. For example, the sending device 210 includes a UWB signal sending module and an NB signal sending module. The receiving device 220 includes a UWB signal receiving module and an NB signal receiving module.

It may be understood that FIG. 2 is described only by using an example in which the communication system 200 includes one sending device and one receiving device. However, the communication system 200 is not limited to including more other devices. For example, the communication system 200 may further include more receiving devices. In addition, in embodiments of this application, the sending device is a device that sends a UWB signal, and the receiving device is a device that receives the UWB signal.

Optionally, the sending device and the receiving device may be used in a plurality of possible application scenarios. For example, in a star topology or a point-to-point topology structure, data communication between one or more other devices of a central control node is involved in the star topology, and is also applicable to communication between different devices in the point-to-point topology structure.

In addition, the signal synchronization method that is applied to an ultra-wideband system and that is provided in this application is further applicable to any scenario in which UWB signal synchronization may need to be performed. This is not limited in embodiments of this application.

FIG. 3 is an interaction flowchart of a signal synchronization method 300 applied to an ultra-wideband system according to an embodiment of this application. The method procedure in FIG. 3 may be performed by a sending device/receiving device, or may be performed by a module and/or a component (for example, a chip or an integrated circuit) that are/is installed in the sending device/receiving device and that have/has a corresponding function. This is not limited. The following embodiments use a sending device/receiving device as an example for description. The method 300 includes the following steps.

S310: The sending device sends an NB signal, where a PPDU of the NB signal includes at least one pilot symbol, and the at least one pilot symbol is used by the receiving device to obtain time-frequency synchronization information of the NB signal.

It may be understood that the pilot symbol (pilot symbol) is a symbol agreed on between the sending device and the receiving device.

Optionally, the pilot symbol may alternatively be a symbol predefined in a protocol.

S320: The receiving device receives the NB signal.

For example, the sending device may be the sending device 210 shown in FIG. 2, and the receiving device may be the receiving device 220 shown in FIG. 2.

It should be understood that the narrowband signal may be understood as a signal whose bandwidth is less than or equal to a first threshold, and an ultra-wideband signal may be understood as a signal whose bandwidth is greater than or equal to a second threshold, where the second threshold is greater than the first threshold.

Specifically, the sending device may send the NB signal by using a Tx NB module. Correspondingly, the receiving device may receive the NB signal by using an Rx NB module.

The receiving device may obtain the time-frequency synchronization information of the NB signal by receiving and processing the NB signal. In other words, the receiving device may implement time-frequency synchronization of the NB signal.

For example, the receiving device may process the NB signal by using an NB signal processing module, to obtain the time-frequency synchronization information of the NB signal. Further, the NB signal processing module of the receiving device provides the obtained time-frequency synchronization information of the NB signal for a UWB signal processing module of the receiving device.

In the technical solution of this application, the receiving device receives and processes the NB signal from the sending device, to implement time-frequency synchronization of the NB signal with the sending device. It may be considered that the NB signal provides the time-frequency synchronization information for the receiving device. The receiving device estimates time-frequency synchronization information of a UWB signal from the sending device based on the time-frequency synchronization information.

S330: The sending device sends the UWB signal.

For example, the sending device may send the UWB signal by using the Tx UWB module.

S340: The receiving device receives the UWB signal.

S350: The receiving device obtains the time-frequency synchronization information of the UWB signal based on the time-frequency synchronization information of the NB signal.

Specifically, the receiving device obtains the time-frequency synchronization information of the UWB signal based on the time-frequency synchronization information of the NB signal. In other words, the receiving device may obtain more accurate time-frequency synchronization information of the UWB signal based on the time-frequency synchronization information provided by the NB signal.

As shown in S320, the NB signal processing module of the receiving device provides the obtained time-frequency synchronization information of the NB signal for the UWB signal processing module of the receiving device. On this basis, the UWB signal processing module of the receiving device obtains more accurate time-frequency synchronization information of the UWB signal based on the time-frequency synchronization information of the NB signal provided by the NB signal processing module.

It can be learned that this application provides a "two-step UWB signal time-frequency synchronization" solution:

Step 1: The sending device first sends the NB signal, and the receiving device may obtain initial time-frequency synchronization information.
Step 2: The sending device sends the UWB signal after sending the NB signal.

Optionally, the time-frequency synchronization information of the NB signal may include time synchronization information and frequency synchronization information.

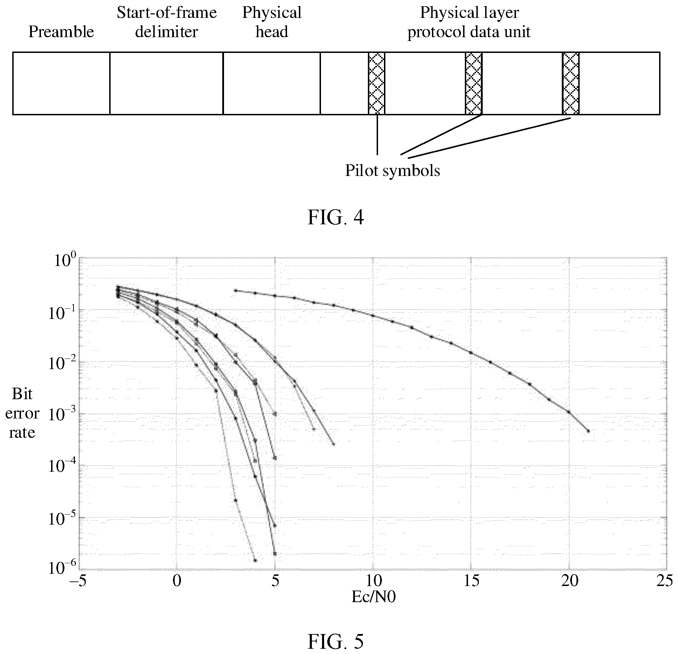

Specifically, the PPDU of the NB signal received by the receiving device includes at least one pilot symbol, and the at least one pilot symbol is used by the receiving device to obtain more accurate time-frequency synchronization information of the NB signal. For example, a value of $T_{max}$ in formula (2) is larger by adding a pilot symbol, and therefore, CFO estimation precision is higher, and the time-frequency synchronization information of the UWB signal is obtained based on the obtained time-frequency synchronization information of the NB signal. For a structure of the PPDU including the at least one pilot symbol, refer to FIG. 4.

Optionally, a specific form of the NB signal is not limited in this application. For example, a center frequency, a bandwidth, a frame format, a modulation scheme, and the like of the NB signal are not limited. For example, the NB signal may be a Zigbee/Bluetooth signal, a center frequency in a 2.4 GHz industrial scientific medical (industrial scientific medical, ISM) frequency band, a bandwidth of 1 MHz or 2 MHz, an O-QPSK modulation scheme, or the like.

The at least one pilot symbol is inserted into the PPDU of the NB signal, and a CFO is estimated based on the inserted pilot symbol and an original preamble in the PPDU. This can support CFO estimation and compensation in a data receiving process, and has higher CFO estimation precision, to implement high-precision time-frequency synchronization of the UWB signal between the sending device and the receiving device.

The following describes a structure of the PPDU including the at least one pilot symbol and a diagram of a related simulation result with reference to the accompanying drawings.

FIG. 4 is a diagram of a structure of a PPDU 400 according to an embodiment of this application. As shown in FIG. 4, a PSDU in the PPDU 400 includes at least one pilot symbol. For example, the at least one pilot symbol may be periodically or aperiodically distributed between PSDUs.

In a possible implementation, a quantity of pilot symbols is associated with a quantity of bytes of the PSDU. For details, refer to Table 2.

**Table 2**

| Quantity of pilot symbols | Quantity of PSDU bytes |
|---|---|
| 4 | ≥95 |
| 3 | [62, 95) |
| 2 | [31, 62) |
| 1 | <31 |

In Table 2, when the quantity of bytes of the PSDU is greater than or equal to 95, the quantity of pilot symbols may be 4. When the quantity of bytes of the PSDU falls with [62, 95), the quantity of pilot symbols may be 3. When the quantity of bytes of the PSDU falls with [31, 62), the quantity of pilot symbols may be 2. When the quantity of bytes of the PSDU is less than 31, the quantity of pilot symbols may be 1. It should be understood that content shown in Table 2 is only used as an example for understanding.

In a possible implementation, the pilot symbol is periodically distributed in the PSDU. A position of the pilot symbol is determined by an initial offset and an interval periodicity. The initial offset is a quantity of symbols between a first pilot symbol and a start position of the PSDU.

Optionally, the interval periodicity between pilot symbols is fixed, that is, the pilot symbol is periodically inserted into the PSDU.

Specifically, a quantity of bytes of a PSDU in a PPDU of a narrowband signal is variable. At least one pilot symbol used by a receiving device to obtain time-frequency synchronization information of the narrowband signal is embedded in the PSDU in the PPDU of the narrowband signal. This can implement estimation and compensation of a carrier frequency offset in a data receiving process without significantly changing a structure of the PPDU, and has higher carrier frequency offset estimation precision, to implement high-precision time-frequency synchronization of the UWB signal between the sending device and the receiving device.

In a possible implementation, each pilot symbol includes M bits, and M is an integer multiple of 4. For example, M=4, 8, 12, ...

In a possible implementation, each pilot symbol includes M bits. The M bits may be all bits 0, or may be all bits 1, or include both bits 0 and 1. This is not limited in embodiments of this application.

Optionally, bits included in the pilot symbol may remain unchanged in a data packet of a PPDU.

FIG. 5 is a diagram of a simulation result of a CFO based on a PPDU 400. As shown in FIG. 5, in an additive white Gaussian noise (additive white Gaussian noise, AWGN) channel, a quantity of bytes of a PSDU including pilot symbols in the PPDU 400 is 127, and each pilot symbol includes four bits 0s. In FIG. 5, a horizontal coordinate indicates a power ratio (unit: dB) of each chip to background noise, and a vertical coordinate indicates a bit error rate of a receiver. FIG. 5 shows simulation results of CFO estimation based on a preamble and CFO estimation based on a preamble and different quantities of inserted pilot symbols. For details, refer to FIG. 5.

Specifically, different curves in FIG. 5 show decoding results based on different CFO estimation methods. In FIG. 5, a "*" solid line curve indicates a decoding result of a CFO estimation method based on a preamble; a "+" solid line curve indicates a decoding result of a CFO estimation method based on a preamble and four pilot symbols (each pilot symbol includes four bits of all 0s); a "+" dotted line curve indicates a decoding result of a CFO estimation method based on a preamble and four pilot symbols (each pilot symbol includes eight bits of all 0s); a "△" solid line curve indicates a decoding result of a CFO estimation method based on a preamble and six pilot symbols (each pilot symbol includes four bits of all 0s); a "△" dotted line curve indicates a decoding result of a CFO estimation method based on a preamble and six pilot symbols (each pilot symbol includes eight bits of all 0s); a "□" solid line curve indicates a decoding result of a CFO estimation method based on a preamble and four pilot symbols (each pilot symbol includes four bits of all 0s); a "□" dotted line curve indicates a decoding result of a CFO estimation method based on a preamble and six pilot symbols (each pilot symbol includes eight bits of all 0s); a "☆" solid line curve indicates a decoding result of a CFO estimation method based on a preamble and eight pilot symbols; and a "☆" dotted line curve indicates a decoding result of a CFO estimation method based on a preamble and 10 pilot symbols (each pilot symbol includes four bits of all 0s).

It can be learned from comparison between the different curves that, on the basis of the decoding result of the CFO estimation method based on the preamble and CFO estimation based on the preamble and the four pilot symbols, and the CFO estimation based on the preamble and four pilot symbols and CFO estimation based on the preamble and six pilot symbols, or the like, when there is a same bit error rate, for example, $10^{-3}$, a simulation result of CFO estimation based on a plurality of inserted pilot symbols and the preamble corresponds to a lower power ratio of a chip to background noise. Therefore, it may indicate that CFO estimation based on the plurality of inserted pilot symbols and the preamble has better performance and higher accuracy. It is verified that CFO estimation and compensation can be supported in a data receiving process by inserting the at least one pilot symbol into the PPDU of the NB signal and performing CFO estimation based on the inserted pilot symbol and an original preamble in the PPDU. This can improve CFO estimation precision, and implement high-precision time-frequency synchronization of the UWB signal between the sending device and the receiving device.

In a possible implementation, a quantity of pilot symbols is 4 or 6. Each pilot symbol includes four bits of all 0s. In this way, a balance between time-frequency synchronization performance and resource overheads can be achieved.

The following describes the communication apparatus according to embodiments of this application with reference to the accompanying drawings.

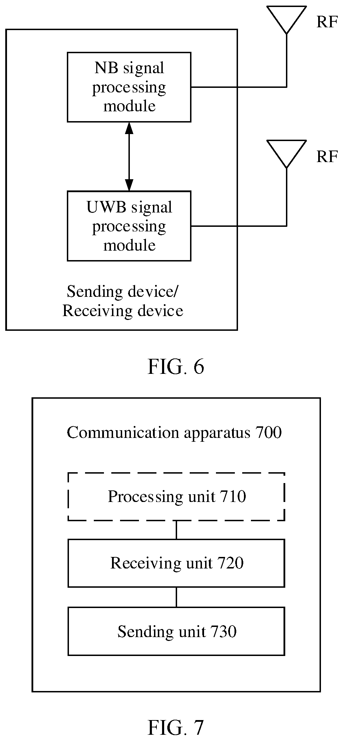

FIG. 6 is a diagram of an internal structure of a sending device/receiving device. As shown in FIG. 6, the receiving device is used as an example. The receiving device may include an NB signal processing module and a UWB signal processing module. The NB signal processing module may process an NB signal received from a sending device by using a radio frequency module, and the UWB signal processing module may process a UWB signal received from the sending device by using the radio frequency module. In addition, the NB signal processing module and the UWB signal processing module may exchange data and/or information. For example, the NB signal processing module sends, to the UWB signal processing module, rough time-frequency synchronization information obtained by processing the NB signal received from the sending device. This is similar to the sending device. Details are not described again.

FIG. 7 is a block diagram of a communication apparatus 700 according to an embodiment of this application. As shown in FIG. 7, the communication apparatus 700 includes a processing unit 710 and a receiving unit 720.

Optionally, the communication apparatus 700 may correspond to a receiving device in embodiments of this application.

In this case, the units of the communication apparatus 700 are configured to implement the following functions.

The processing unit 710 is configured to:

process a narrowband signal, and is configured to obtain time-frequency synchronization information of a UWB signal based on time-frequency synchronization information of an NB signal; and
the receiving unit 720 is configured to receive the NB signal and the UWB signal.

Optionally, in an embodiment, the receiving unit 720 is configured to receive the UWB signal based on the time-frequency synchronization information of the NB signal; and
the processing unit 710 is configured to detect the UWB signal to obtain the time-frequency synchronization information of the UWB signal.

In the foregoing implementations, the receiving unit 720 and the sending unit 730 may alternatively be integrated into one transceiver unit, and have both of a receiving function and a sending function. This is not limited herein.

In embodiments in which the communication apparatus 700 corresponds to the receiving device, the processing unit 710 is configured to perform processing and/or an operation, other than sending and receiving actions, implemented inside the receiving device, the receiving unit 720 is configured to perform the receiving action performed by the receiving device, and the sending unit 730 is configured to perform the sending action performed by the receiving device.

Optionally, the communication apparatus 700 may correspond to a sending device in embodiments of this application. Optionally, the communication apparatus 700 further includes a sending unit 730.

In this case, the units of the communication apparatus 700 are configured to implement the following functions.

The processing unit 710 is configured to generate an NB signal and a UWB signal; and

the sending unit 730 is configured to: send the NB signal; and
send the UWB signal.

In the foregoing implementations, the receiving unit 720 and the sending unit 730 may alternatively be integrated into one transceiver unit, and have both of a receiving function and a sending function. This is not limited herein.

In embodiments in which the communication apparatus 700 corresponds to the sending device, the processing unit 710 is configured to perform processing and/or an operation, other than sending and receiving actions, implemented inside the sending device, the receiving unit 720 is configured to perform a receiving action performed by the sending device, and the sending unit 730 is configured to perform a sending action performed by the sending device.

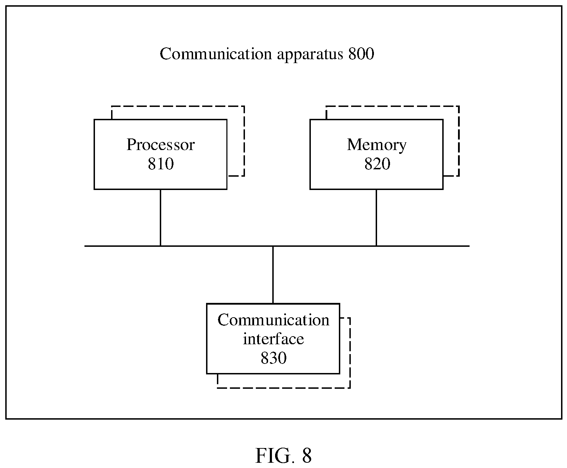

FIG. 8 is a diagram of a structure of a communication apparatus 800 according to an embodiment of this application. As shown in FIG. 8, the communication apparatus 800 includes one or more processors 810, one or more memories 820, and one or more communication interfaces 830. The processor 810 is configured to control the communication interface 830 to receive and send a signal, the memory 820 is configured to store a computer program, and the processor 810 is configured to: invoke the computer program from the memory 820, and run the computer program, to enable the communication apparatus 800 to perform processing performed by the receiving device or the sending device in the method embodiments of this application.

For example, the processor 810 may have a function of the processing unit 710 shown in FIG. 7, and the communication interface 830 may have functions of the receiving unit 720 and/or the sending unit 730 shown in FIG. 7. Specifically, the processor 810 may be configured to perform processing or an operation performed inside the communication apparatus, and the communication interface 830 is configured to perform a sending and/or receiving operation performed by the communication apparatus.

Optionally, in an implementation, the communication apparatus 800 may be the receiving device in the method embodiments. In this implementation, the communication interface 830 may be a transceiver of the receiving device. The transceiver may include a receiver and/or a transmitter. Optionally, the processor 810 may be a baseband apparatus of the receiving device, and the communication interface 830 may be a radio frequency apparatus.

In another implementation, the communication apparatus 800 may be a chip (or a chip system) installed in the receiving device. In this implementation, the communication interface 830 may be an interface circuit or an input/output interface.

Optionally, in an implementation, the communication apparatus 800 may be the sending device in the method embodiments. In this implementation, the communication interface 830 may be a transceiver of the sending device. The transceiver may include a receiver and/or a transmitter. Optionally, the processor 810 may be a baseband apparatus of the sending device, and the communication interface 830 may be a radio frequency apparatus.

In another implementation, the communication apparatus 800 may be a chip (or a chip system) installed in the sending device. In this implementation, the communication interface 830 may be an interface circuit or an input/output interface.

In FIG. 8, a dashed box behind a component (for example, the processor, the memory, or the communication interface) indicates that there may be at least one component.

In addition, this application further provides a computer-readable storage medium. The computer-readable storage medium stores computer instructions, and when the computer instructions are run on a computer, an operation and/or processing performed by the receiving device in the method embodiments of this application are/is performed.

This application further provides a computer-readable storage medium. The computer-readable storage medium stores computer instructions, and when the computer instructions are run on a computer, an operation and/or processing performed by the sending device in the method embodiments of this application are/is performed.

This application further provides a computer program product. The computer program product includes computer program code or instructions. When the computer program code or the instructions are run on a computer, an operation and/or processing performed by the receiving device in the method embodiments of this application are/is performed.

This application further provides a computer program product. The computer program product includes computer program code or instructions. When the computer program code or the instructions are run on a computer, an operation and/or processing performed by the sending device in the method embodiments of this application are/is performed.

This application further provides a chip. The chip includes a processor. A memory configured to store a computer program is disposed independent of the chip. The processor is configured to execute the computer program stored in the memory, so that a communication apparatus in which the chip is installed performs the operation and/or processing performed by the receiving device in any method embodiment.

This application further provides a chip. The chip includes a processor. A memory configured to store a computer program is disposed independent of the chip. The processor is configured to execute the computer program stored in the memory, so that a communication apparatus in which the chip is installed performs the operation and/or processing performed by the sending device in any method embodiment.

Further, the chip may include a communication interface. The communication interface may be an input/output interface, an interface circuit, or the like. Further, the chip may include the memory.

Optionally, there may be one or more processors, there may be one or more memories, and there may be one or more memories.

This application further provides a communication apparatus (for example, may be a chip or a chip system), including a processor and a communication interface. The communication interface is configured to receive (or referred to as input) data and/or information, and transmit the received data and/or information to the processor. The processor processes the data and/or information. The communication interface is further configured to output (or referred to as output) data and/or information processed by the processor, so that an operation and/or processing performed by the receiving device in any method embodiment are/is performed.

This application further provides a communication apparatus (for example, may be a chip or a chip system), including a processor and a communication interface. The communication interface is configured to receive (or referred to as input) data and/or information, and transmit the received data and/or information to the processor. The processor processes the data and/or information. The communication interface is further configured to output (or referred to as output) data and/or information processed by the processor, so that an operation and/or processing performed by the sending device in any method embodiment are/is performed.

This application further provides a communication apparatus, including at least one processor. The at least one processor is coupled to at least one memory. The at least one processor is configured to execute a computer program or instructions stored in the at least one memory, so that the communication apparatus performs an operation and/or processing performed by the receiving device in any method embodiment.

This application further provides a communication apparatus, including at least one processor. The at least one processor is coupled to at least one memory. The at least one processor is configured to execute a computer program or instructions stored in the at least one memory, so that the communication apparatus performs an operation and/or processing performed by the sending device in any method embodiment.

This application further provides a wireless communication system, including the receiving device in the method embodiments of this application. Optionally, the wireless communication system may further include the sending device in the method embodiments.

A processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware assembly. The general-purpose processor may be a microprocessor, or the processor may be any conventional processor, or the like. The steps of the methods disclosed in embodiments of this application may be directly presented as being performed and completed by a hardware encoding processor, or performed and completed by a combination of hardware and a software module in an encoding processor. A software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

A memory in embodiments of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DRRAM). It should be noted that the memory in the system and method described in this specification includes but is not limited to these memories and any memory of another proper type.

All or some of the methods provided in the foregoing embodiments may be implemented by software, hardware, firmware, or any combination thereof. When software is used to implement the embodiments, all or some of the embodiments may be implemented in a form of a computer program product. The computer program product may include one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is only an example. For example, division into the units is only logical function division and may be other division in actual implementation. For example, a plurality of units or assemblies may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal synchronization method applied to an ultra-wideband system, comprising:

   sending a narrowband signal, wherein a physical layer protocol data unit PPDU of the narrowband signal comprises at least one pilot symbol, the at least one pilot symbol is used by a receiving device to obtain time-frequency synchronization information of the narrowband signal, and the at least one pilot symbol is a symbol agreed on by a sending device and the receiving device; and
   sending an ultra-wideband signal, wherein
   the time-frequency synchronization information of the narrowband signal is used by the receiving device to obtain time-frequency synchronization information of the ultra-wideband signal.

2. The method according to claim 1, wherein a physical layer service data unit PSDU in the PPDU comprises the at least one pilot symbol.

3. The method according to claim 1 or 2, wherein each pilot symbol comprises M bits of 0, and M is an integer multiple of 4.

4. The method according to any one of claims 1 to 3, wherein the narrowband signal and the ultra-wideband signal have a common local clock.

5. A signal synchronization method applied to an ultra-wideband system, comprising:

   receiving a narrowband signal, wherein a physical layer protocol data unit PPDU of the narrowband signal comprises at least one pilot symbol, the at least one pilot symbol is used by a receiving device to obtain time-frequency synchronization information of the narrowband signal, and the at least one pilot symbol is a symbol agreed on by a sending device and the receiving device;
   receiving an ultra-wideband signal; and
   obtaining time-frequency synchronization information of the ultra-wideband signal based on the time-frequency synchronization information of the narrowband signal.

6. The method according to claim 5, wherein a physical layer service data unit PSDU in the PPDU comprises the at least one pilot symbol.

7. The method according to claim 5 or 6, wherein each pilot symbol comprises M bits of 0, and M is an integer multiple of 4.

8. The method according to any one of claims 5 to 7, wherein the narrowband signal and the ultra-wideband signal have a common local clock.

9. A communication apparatus, comprising:

   a sending unit, configured to send a narrowband signal, wherein a physical layer protocol data unit PPDU of the narrowband signal comprises at least one pilot symbol, the at least one pilot symbol is used by a receiving device to obtain time-frequency synchronization information of the narrowband signal, and the at least one pilot symbol is a symbol agreed on by the communication apparatus and the receiving device, wherein
   the sending unit is further configured to send an ultra-wideband signal; and
   the time-frequency synchronization information of the narrowband signal is used by the receiving device to obtain time-frequency synchronization information of the ultra-wideband signal.

10. The apparatus according to claim 9, wherein a physical layer service data unit PSDU in the PPDU comprises the at least one pilot symbol.

11. The apparatus according to claim 9 or 10, wherein each pilot symbol comprises M bits of 0, and M is an integer multiple of 4.

12. The apparatus according to any one of claims 9 to 11, wherein the narrowband signal and the ultra-wideband signal have a common local clock.

13. A communication apparatus, comprising:

a receiving unit, configured to receive a narrowband signal, wherein a physical layer protocol data unit PPDU of the narrowband signal comprises at least one pilot symbol, the at least one pilot symbol is used by the communication apparatus to obtain time-frequency synchronization information of the narrowband signal, and the at least one pilot symbol is a symbol agreed on by a sending device and the communication apparatus, wherein
the receiving unit is further configured to receive an ultra-wideband signal; and
a processing unit, configured to obtain time-frequency synchronization information of the ultra-wideband signal based on the time-frequency synchronization information of the narrowband signal.

14. The apparatus according to claim 13, wherein a physical layer service data unit PSDU in the PPDU comprises the at least one pilot symbol.

15. The apparatus according to claim 13 or 14, wherein each pilot symbol comprises M bits of 0, and M is an integer multiple of 4.

16. The apparatus according to any one of claims 13 to 15, wherein the narrowband signal and the ultra-wideband signal have a common local clock.

17. A computer-readable storage medium, wherein the computer-readable storage medium stores computer instructions, and when the computer instructions are run on a computer, the method according to any one of claims 1 to 8 is performed.

18. A computer program product, wherein the computer program product comprises computer program code, and when the computer program code is run on a computer, the method according to any one of claims 1 to 8 is performed.

19. A wireless communication system, wherein the wireless communication system comprises the communication apparatus according to any one of claims 9 to 12, and the communication apparatus according to any one of claims 13 to 16.

20. A chip system, comprising a processor, configured to invoke a computer program from a memory and run the computer program, to enable a communication device on which the chip system is installed to perform the method according to any one of claims 1 to 8.

|←————————— PPDU in a narrowband system —————————→|

| SHR | PHR | PHY payload |
|---|---|---|

FIG. 1

| Sending device 210 | | | Receiving device 220 | |
|---|---|---|---|---|
| Tx UWB | Tx NB | | Rx UWB | Rx NB |

FIG. 2

300

| Sending device | | Receiving device |
|---|---|---|

S310: Send an NB signal, where a PPDU of the NB signal includes at least one pilot symbol, and the pilot symbol is used by the receiving device to obtain time-frequency synchronization information of the NB signal

S320: Receive the NB signal

S330: Send a UWB signal

S340: Receive the UWB signal

S350: Obtain time-frequency synchronization information of the UWB signal based on the time-frequency synchronization information of the NB signal

FIG. 3

| Preamble | Start-of-frame delimiter | Physical head | | | Physical layer protocol data unit | | |

Pilot symbols

FIG. 4

Bit error rate (y-axis) vs Ec/N0 (x-axis)

FIG. 5

NB signal processing module

RF

UWB signal processing module

RF

Sending device/ Receiving device

FIG. 6

Communication apparatus 700

Processing unit 710

Receiving unit 720

Sending unit 730

FIG. 7

Communication apparatus 800

Processor
810

Memory
820

Communication
interface
830

FIG. 8

## INTERNATIONAL SEARCH REPORT

| International application No. |
| --- |
| **PCT/CN2023/100151** |

| A. | CLASSIFICATION OF SUBJECT MATTER |
| --- | --- |
| | H04L5/00(2006.01)i;  H04B1/69(2011.01)i |

According to International Patent Classification (IPC) or to both national classification and IPC

| B. | FIELDS SEARCHED |
| --- | --- |

Minimum documentation searched (classification system followed by classification symbols)

IPC: H04L H04B

Documentation searched other than minimum documentation to the extent that such documents are included in the fields searched

Electronic data base consulted during the international search (name of data base and, where practicable, search terms used)

3GPP, CNTXT, ENTXT, ENTXTC, USTXT, WOTXT, WPABS, WPABSC, CNKI, IEEE: 超宽带, 导频, 辅助, 频率偏移, 时频同步, 同步头, 窄带, narrowband, nb, pilot, SHR, uwb, narrow-band, frequency shift, frequency offset, narrow band, assist+, time, synchron+, PPDU

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2022141657 A1 (APPLE INC.) 05 May 2022 (2022-05-05)<br>  description, paragraphs 92-96 and 197 | 1-20 |
| A | CN 102255631 A (INFORMATION ENGINEERING UNIVERSITY OF PLA) 23 November 2011 (2011-11-23)<br>  entire document | 1-20 |
| A | CN 110086584 A (BEIJING PINECONE ELECTRONICS CO., LTD.) 02 August 2019 (2019-08-02)<br>  entire document | 1-20 |
| A | CN 113206723 A (APPLE INC.) 03 August 2021 (2021-08-03)<br>  entire document | 1-20 |
| A | NABKI, Frederic. "Channel Access using Clear Channel Assessment (CCA), Useful Tool for Efficient UWB Communication"<br>*doc.: 15-21-0412-00-04ab,* 20 July 2021 (2021-07-20),<br>  entire document | 1-20 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 August 2023** | **23 August 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/100151**

| Patent document cited in search report | | | Publication date (day/month/year) | Patent family member(s) | | | Publication date (day/month/year) |
|---|---|---|---|---|---|---|---|
| US | 2022141657 | A1 | 05 May 2022 | None | | | |
| CN | 102255631 | A | 23 November 2011 | None | | | |
| CN | 110086584 | A | 02 August 2019 | None | | | |
| CN | 113206723 | A | 03 August 2021 | US | 2021242901 | A1 | 05 August 2021 |
| | | | | US | 11239881 | B2 | 01 February 2022 |
| | | | | DE | 102021102288 | A1 | 05 August 2021 |
| | | | | US | 2022131568 | A1 | 28 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210703945